**Europäisches Patentamt**

**European Patent Office**

**Office européen des brevets**

(19)

(11) Veröffentlichungsnummer : **0 339 180 B1**

(12)

# EUROPÄISCHE PATENTSCHRIFT

(45) Veröffentlichungstag der Patentschrift :
**04.03.92 Patentblatt 92/10**

(51) Int. Cl.⁵ : **B60G 17/04**

(21) Anmeldenummer : **89100848.4**

(22) Anmeldetag : **19.01.89**

(54) **Gasdruckfeder.**

(30) Priorität : **25.04.88 DE 3813873**

(43) Veröffentlichungstag der Anmeldung :
**02.11.89 Patentblatt 89/44**

(45) Bekanntmachung des Hinweises auf die
Patenterteilung :
**04.03.92 Patentblatt 92/10**

(84) Benannte Vertragsstaaten :
**DE FR GB IT**

(56) Entgegenhaltungen :
**EP-A- 0 080 291**

(56) Entgegenhaltungen :
**DE-C- 3 622 017**
**PATENT ABSTRACTS OF JAPAN, Band 12, Nr.**
**257 (M-719)[3104], 20. Juli 1988; & JP-A-63 41**
**214 (MAZDA MOTOR CORP.) 22-02-1988**

(73) Patentinhaber : **Firma Carl Freudenberg**
**Höhnerweg 2-4**
**W-6940 Weinheim/Bergstrasse (DE)**

(72) Erfinder : **Eckel, Hans-Gerd, Dr.**
**Wagnerstrasse 11**
**W-6947 Laudenbach (DE)**
Erfinder : **Schweikert, Willi**
**Mannheimer Strasse 263**
**W-6900 Heidelberg (DE)**

EP 0 339 180 B1

## Beschreibung

Die Erfindung betrifft eine Gasdruckfeder nach dem Oberbegriff von Anspruch 1.

Eine solche Gasdruckfeder ist aus der DE-A- 36 22 017 bekannt. Sie bedient sich der Verwendung eines Frequenzfilters, um eine gegenseitige Beeinträchtigung der Funktionen der beiden Hilfsmittel zu verhindern. Das Ausblasen überschüssigen, vorgespannten Gases aus dem Innenraum erfolgt in die Atmosphäre.

Die beiden Hilfsmittel umfassen ein erstes, welches für die Kompensation von schwingungsbedingten Druckveränderungen in der Gasdruckfeder vorgesehen ist. Solche Druckveränderungen können beispielsweise bei einer Verwendung der Gasdruckfeder im Bereich der Radabstützung eines Kraftfahrzeuges durch das Überfahren von Kopfsteinpflaster verursacht sein. Sie bewirken eine Veränderung der Abstützkräfte der Karrosserie und machen sich in derselben in Form von Dröhnschwingungen bemerkbar. Es besteht daher der Wunsch, entsprechende Druckveränderungen möglichst vollständig zu kompensieren. In technischer Hinsicht sind die diesbezüglichen Probleme weitestgehend gelöst, so daß es beim derzeitigen Stand der Technik möglich ist, auch in derartigen Problemfällen eine weitgehende Konstanthaltung des Innendruckes der Gasdruckfeder auf einem bestimmten Niveau zu gewährleisten und auf diese Weise Veränderungen der auf die Karrosserie ausgeübte Abstützkräfte zu verhindern.

Neben den vorstehend beschriebenen ersten Hilfsmitteln weisen die vorbekannten Gasdruckfedern zweite Hilfsmittel auf, welche dazu bestimmt sind, eine gleichbleibende gegenseitige Zuordnung der durch die Gasdruckfeder abgestützten Elemente zu gewährleisten.

Sie haben eine der vorstehend beschriebenen entgegengesetzte Funktion insofern, als beispielsweise die beladungsbedingte Absenkung eines Kraftfahrzeuges nur dadurch kompensiert werden kann, wenn so lange zusätzliches Druckgas in die Gasdruckfeder eingespeist wird, bis das ursprüngliche Niveau wiederum erreicht ist. Hiermit ist automatisch eine Druckerhöhung in der Gasdruckfeder verbunden und damit zugleich die gezielte Herbeiführung einer Druckabweichung vom ursprünglich vorhandenen Niveau. Eine gegenseitige Beeinträchtigung der Funktionen des ersten und des zweiten Hilfsmittels ist daher durchaus denkbar. Dem zweiten Hilfsmittel ist aus diesem Grunde bei der Gasdruckfeder nach der DE-A- 36 22 017 ein Frequenzfilter vorgeschaltet, durch das seine Funktion bei Lageveränderungen der abgestützten Körper bei einer Frequenz von mehr als 1 Hz aufgehoben ist. Diese Problemlösung ist bei einigen technischen Anwendungen noch wenig befriedigend.

Der Erfindung liegt die Aufgabe zugrunde, eine Gasdruckfeder der eingangs genannten Art derart weiter zu entwickeln, daß unabhängig von dem gegebenen Anwendungsfall stets eine optimale Isolierung des abgestützten Körpers gewährleistet ist und dabei zugleich eine optimale gegenseitige Zuordnung zwischen den durch die Gasdruckfeder verbundenen Elementen.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Bei der erfindungsgemäßen Gasdruckfeder ist das erste Hilfsmittel nur bei Druckveränderungen oberhalb eines Schwellwertes wirksam und das zweite Hilfsmittel nur bei Veränderungen der gegenseitigen Zuordnung der beiden Elemente einer Frequenz unterhalb desselben Schwellwertes. Beide Hilfsmittel umfassen somit jeweils ein Frequenzfilter, durch welches die Wirksamkeiten gegeneinander derart abgegrenzt werden, daß eine gegenseitige Beeinflussung oder Störung völlig ausgeschlossen ist.

Der Schwellwert sollte unter schwingungstechnischen Gesichtspunkten zweckmäßig im Bereich zwischen 0,1 und 0,5 Hz liegen, vorteilhafter im Bereich zwischen 0,25 und 0,35 Hz. Die in der Schwingungstechnik besonders relevanten Frequenzen liegen beiderseits der angegebenen Bereiche. Sie umfassen einerseits höherfrequente Schwingungen, welche sich in nachgeschalteten Aggregaten als sogenannte Dröhnschwingungen sehr störend bemerkbar machen können und andererseits tieferfrequente Schwingungen, welche der Regulierung bedürfen, wenn Auswanderungsbewegungen vermieden werden sollen.

Das erste und das zweite Hilfsmittel können Ausgänge haben, die gemeinsam an den Eingang eines einzigen Servo - Ein-/Auslaßventiles angeschlossen sind. Eine entsprechende Ausführung zeichnet sich durch einen besonders geringen Beschaffungsaufwand aus.

Nach einer anderen Ausgestaltung ist es vorgesehen, daß das erste und das zweite Hilfsmittel Ausgänge haben, die jeweils mit dem Eingang von separaten Servo - Ein-/Auslaßventilen verbunden sind. In diesem Falle ergibt sich die Möglichkeit, in beiden Fällen voneinander verschiedene Servo - Ein-/Auslaßventile zu verwenden in Hinblick auf eine verbesserte Anpassungsmöglichkeit an besondere Gegebenheiten des Anwendungsfalles.

Als besonders zweckmässig hat es sich erwiesen, wenn jedes zur Anwendung gelangende Servo - Ein-/Auslaßventil einen Durchflußquerschnitt hat, der proportional zur Größe der tatsächlichen Druck- /Lageabweichung der Gasdruckfeder bzw. der durch diese abgestützten Elemente veränderbar ist. Bei verbesserter Wirksamkeit ist bei einer solchen Ausführung der spezifische Verbrauch an Druckgas besonders gering.

Das Servo - Ein-/Auslaßventil des ersten Hilfsmittels kann einen maximalen Durchflußquerschnitt aufweisen, der kleiner ist als derjenige des Servo - Ein-/Auslaßventils des zweiten Hilfsmittels. Dem häufigen Anwendungsfall, bei welchem eine Kompensation von Lageveränderungen der durch die Gasdruckfeder verbundenen Elemente sehr viel seltener erforderlich ist als die Kompensation von schwingungsbedingten Druckveränderungen der Gasdruckfeder wird eine solche Ausführung besonders gerecht.

Nach einer anderen Ausgestaltung ist es vorgesehen, daß das zweite Hilfsmittel einen Sensor für Extremverlagerungen der beiden durch die Gasdruckfeder aufeinander abgestützten Elemente umfaßt, daß der Sensor signalleitend mit dem ersten Hilfsmittel verbunden ist und daß das erste Hilfsmittel durch ein Signal des Sensors inaktivierbar ist. Die Gasdruckfeder verhält sich folglich bei einer Aktivierung dieses Sensors so lange als passive Gasdruckfeder, wie erforderlich, um die aktuelle Extremverlagerung zu beseitigen. Die erforderliche Rückführung der durch die Gasdruckfeder aufeinander abgestützten Elemente erfolgt dementsprechend ganz besonders schnell.

Der Gegenstand der Erfindung wird nachfolgend anhand der Zeichnung weiter erläutert. Es zeigen:

Fig. 1: Eine Ausführung der Gasdruckfeder, bei der die Signalausgänge des ersten und des zweiten Hilfsmittels mit dem Signaleingang eines einzigen Servo - Ein-/Auslaßventils verbunden sind.

Fig. 2: Eine Ausführung, bei der die Signalausgänge des ersten und des zweiten Hilfsmittels jeweils mit einem selbständigen Servo - Ein-/Auslaßventil verbunden sind.

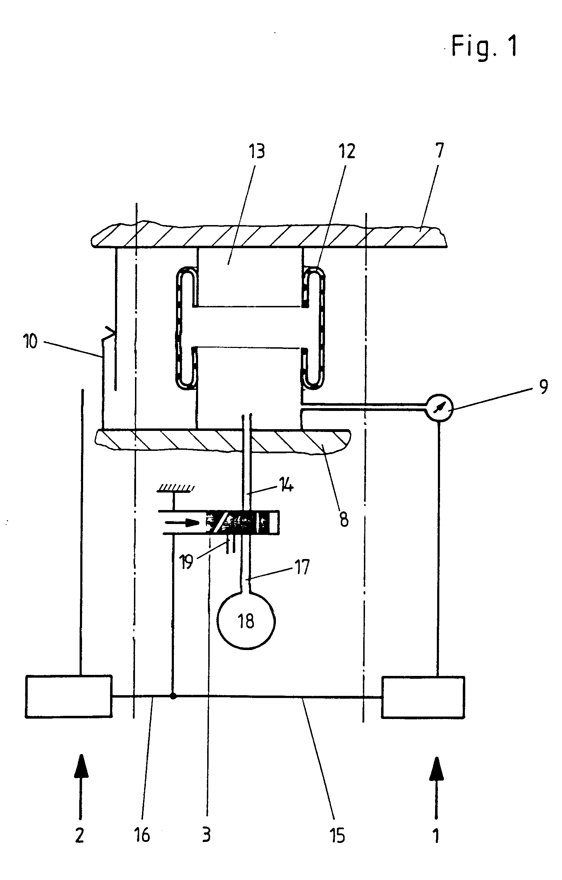

Die in Fig.1 gezeigte Gasdruckfeder dient der gegenseitigen Abstützung zweier relativ zueinander beweglicher Elemente 7,8, die beispielsweise durch das Chassis und den Radlenker eines Kraftfahrzeuges gebildet sein können. Während bei einer solchen Anwendung das Chassis in einer relativen Ruhelage verharrt, befindet sich der Radlenker in Abhängigkeit von dem zeitlichen Abstand und der Größe der überfahrenen Fahrbahnunebenheiten in einer ständigen Auf- und Abbewegung, welche durch entsprechende Deformationen des Gummibalges 12 der Gasdruckfeder ausgeglichen wird.

Mit dem Innenraum 13 der Gasdruckfeder ist ein Drucksensor 9 verbunden, welcher einen Bestandteil des ersten Hilfsmittels 1 bildet. Dieses besteht im übrigen aus einer Rechnereinheit, welche durch einen Signalausgang 15 mit dem Signaleingang des Servo - Ein-/Auslaßventiles 3 verbunden ist.

Des weiteren ist parallel zu der Gasdruckfeder eine Meßvorrichtung 10 zwischen den beiden Elementen 7,8 angeordnet, welche kontinuierlich Relativverlagerungen derselben erfaßt und in ein Signal umwandelt, welches der Rechnereinheit des zweiten Hilfsmittels 2 zugeleitet wird. Deren Signalausgang 16 ist mit dem Signalausgang 15 der Rechnereinheit des ersten Hilfsmittels verbunden und ebenso wie dieser an den Signaleingang des Servo - Ein-/Auslaßventils 3 angeschlossen.

Das Servoventil 3 ist durch eine Leitung 14 mit dem Innenraum 13 der Gasdruckfeder verbunden und durch eine Leitung 17 mit dem Druckgasreservoir 18. Desweiteren ist eine Auslaßöffnung 19 vorgesehen, welche in die Atmosphäre mündet. Eine Mündung in das Ansaugsystem des Druckgasreservoirs, beispielsweise einen Speicher, ist ebenfalls möglich und macht eine kontinuierliche Aufbereitung von Luft entbehrlich sowie die Anwendung besonderer Maßnahmen zur Unterdrückung von Ansaug- und Entspannunggeräuschen.

Zur Funktion läßt sich anhand des vorstehend angedeuteten Beispieles, welches Bezug auf eine Verwendung der erfindungsgemäßen Gasdruckfeder im Bereich der Radlenkerabstützung eines Kraftfahrzeuges nimmt, folgendes ausführen:

Bei Fahrzeugstillstand und vollkommen entleertem Innenraum 13 der Gasdruckfeder erhält die Rechnereinheit des zweiten Hilfsmittels durch die Abstandsmeßeinrichtung 10 der beiden Elemente 7,8 das Signal, daß eine extreme gegenseitige Annäherung der Elemente 7,8 vorliegt sowie ein schwingungsloser Zustand. Ein Ausgangssignal erscheint am Ausgang der Rechnereinheit des zweiten Hilfsmittels dann, wenn die Frequenz der relativen Lageveränderungen der Elemente 7,8 weniger als 0,5 Hz beträgt. Das ist in der gegebenen Situation der Fall, weshalb das Ausgangssignal erscheint und eine Veränderung der Schaltstellung des Servoventils 3 bewirkt. Das Druckgasreservoir 18 wird hierdurch mit der Leitung 14 verbunden, welche in den Innenraum 13 der Gasdruckfeder mündet. Diese wird mit Druckgas aufgefüllt, bis sich die beiden Elementen 7,8 so weitgehend voneinander entfernt haben, daß die Abstandsmeßeinrichtung 10 eine mittlere gegenseitige Zuordnung anzeigt und das Ausgangssignal der Rechnereinheit des zweiten Hilfsmittels in Wegfall bringt.

Der vorstehend beschriebene Schaltvorgang kann durch die Rechnereinheit des ersten Hilfsmittels 1 nicht beeinträchtigt werden. Diese ist durch ein Signal der Druckmeßeinrichtung 9 beaufschlagt, welches zunächst angibt, daß im Innenraum 13 der Gasdruckfeder ein Innendruck nicht vorhanden ist und daß sich die Gasdruckfeder in einem schwingungsfreien Zustand befindet. Am Signalausgang der Rechnereinheit des ersten Hilfsmittels erscheint das Ausgangssignal jedoch nur dann, wenn Druckveränderungen einer Frequenz von mehr als 0,5 Hz auftreten. Das ist in der gegebenen Situation nicht der Fall. Das Ausgangssignal ist folglich in diesem Fall gesperrt. Eine Beeinträchtigung des Ausgangssignals der zweiten Rechnereinheit 2 ist daher ausgeschlossen.

Während des normalen Fahrbetriebes treten schwingende Lagerveränderungen des Elementes 8 auf in bezug auf das Element 7. Diese haben sehr schnelle Druckveränderungen im Innenraum 13 der Gasdruckfeder zur Folge, welche fortlaufend von der Druckmesseinrichtung 9 registriert und der Rechnereinheit des ersten Hilfsmittels 1 zugeleitet werden. Diese bewirken eine signalproportionale Verstellung des Servoventils 3 dergestalt, daß die Druckveränderungen im dem Innenraum 13 der Gasdruckfeder bereits während ihrer Entstehung aufgefangen werden durch entsprechende Betätigungen des Servoventils 3, d.h. durch zusätzliche Einspeisung von vorgespanntem Druckgas in den Innenraum 13 der Gasdruckfeder bzw. durch das Entweichenlassen von einer entsprechenden Menge vorgespannten Druckgases aus dem Innenraum 13 der Gasdruckfeder in die Atmosphäre. Der Druck im Innenraum 13 der Gasdruckfeder bleibt dadurch weitgehend konstant und eine Veränderung der von der Gasdruckfeder auf das abgestützte Chassis ausgeübten Kräfte unterbleibt in entsprechend hohem Maße.

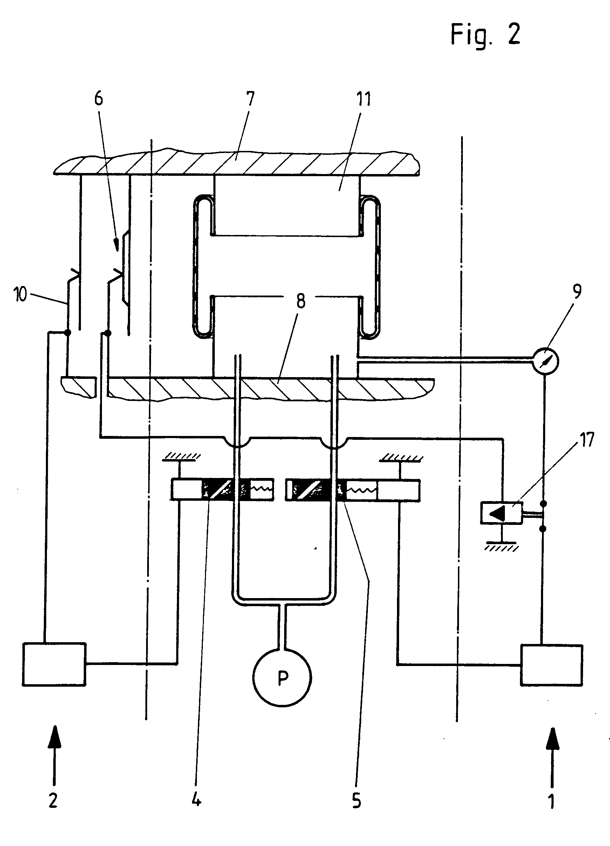

Die in Fig. 2 gezeigte Ausführung ist der vorstehenden in konstruktiver Hinsicht ähnlich. In diesem Falle gelangen jedoch zwei unabhängig voneinander betätigbare Servo - Ein-/Auslaßventile 4,5 zur Anwendung, welche einerseits durch die Rechnereinheit des zweiten Hilfsmittels 2 und andererseits durch die Rechnereinheit des ersten Hilfsmittels 1 betätigbar sind.

Des weiteren ist ein zusätzlicher Sensor 6 vorgesehen, welcher Extremverlagerungen des Elementes 8 in bezug auf das Element 7 erfaßt und einem Schaltrelais 17 zuleitet, durch welches die Wirksamkeit der Rechnereinheit des ersten Hilfsmittels aufhebbar ist.

Zur Funktion läßt sich folgendes ausführen: Der Ablauf beginnt zunächst mit einer ähnlichen Funktionsweise wie vorstehend beschrieben. Darüber hinaus werden bei einer gegenseitigen Überlagerung der dynamischen und der statischen Belastung der Gasdruckfeder, wie beispielsweise bei der schnellen Kurvenfahrt oder beim schnellen Abbremsen eines Kraftfahrzeuges zu erwarten, die beiden Servo - Ein-/Auslaßventile 4,5 unabhängig und gegebenenfalls gleichzeitig betätigt, um neben einem weitestgehend konstanten Innendruck der Gasdruckfeder eine gleichbleibende gegenseitige Zuordnung der Elemente 8 und 11 zu gewährleisten. Treten dennoch Extremverlagerungen auf, dann wird die Funktion der Rechnereinheit des ersten Hilfsmittels 1 durch das Ausgangssignal des Sensors 6 gesperrt. Die Gasdruckfeder verhält sich dann vorübergehend wie eine passive Gasdruckfeder, um die ursprüngliche, mittlere gegenseitige Zuordnung zwischen den Elementen 7,8 um so schneller wieder herzustellen. Der Sensor 6 wird hierdurch wiederum außer Funktion gesetzt. Die ursprüngliche Gesamtfunktion wird wiederum zur Gänze erhalten.

## Patentansprüche

1. Gasdruckfeder zur gegenseitigen Abstützung zweier sich relativ bewegender, schwingender Elemente (7,8), bei der durch Sensoren (9,10) gesteuerte erste und zweite Hilfsmittel (1,2) vorgesehen sind, die das Ausblasen überschüssigen Druckgases aus der Gasdruckfeder bzw. die Einspeisung zusätzlichen Druckgases in die Gasdruckfeder durch die Betätigung von Ventilen (3;4,5) bewirken, wobei das erste Hilfsmittel (1) für die Kompensation von schwingungsbedingten Druckveränderungen in der Gasdruckfeder vorgesehen ist, wobei das zweite Hilfsmittel (2) für eine Kompensation von lagemäßigen Veränderungen der gegenseitigen Zuordnung der durch die Gasdruckfeder abgestützten Elemente (7,8) vorgesehen ist und wobei die Funktion des zweiten Hilfsmittels (2) bei Einleitung von Schwingungen einer Frequenz von mehr als 1 Hz durch ein Frequenzfilter aufgehoben ist, dadurch gekennzeichnet, daß das erste Hilfsmittel (1) nur bei Druckveränderungen einer Frequenz oberhalb eines Schwellwertes wirksam ist und das zweite Hilfsmittel (2) nur bei Veränderungen der gegenseitigen Zuordnung der beiden Elemente (7,8) einer Frequenz unterhalb des Schwellwertes.

2. Gasdruckfeder nach Anspruch 1, dadurch gekennzeichnet, daß der Schwellwert bei einer Frequenz der eingeleiteten Schwingungen von 0,1 bis 0,5 Hz liegt.

3. Gasdruckfeder nach Anspruch 1 bis 2, dadurch gekennzeichnet, daß der Schwellwert bei einer Frequenz der eingeleiteten Schwingungen von 0,25 bis 0,35 Hz liegt.

4. Gasdruckfeder nach Anspruch 1 bis 3, dadurch gekennzeichnet, daß das erste und das zweite Hilfsmittel (1,2) Signalausgänge haben, die gemeinsam an den Signaleingang eines einzigen Servo- Ein-/Auslaßventils (3) angeschlossen sind.

5. Gasdruckfeder nach Anspruch 1 bis 3, dadurch gekennzeichnet, daß das erste und das zweite Hilfsmittel (1,2) Signalausgänge haben, die jeweils an den Signaleingang eines separaten Servo - Ein-/Auslaßventils (4,5) angeschlossen sind.

6. Gasdruckfeder nach Anspruch 5, dadurch gekennzeichnet, daß die separaten Servo - Ein-/Auslaßventile (4,5) einen Durchflußquerschnitt haben, der proportional zur Größe der tatsächlichen Druck- /Lageabweichung veränderbar ist.

7. Gasdruckfeder nach Anspruch 1 bis 5, dadurch gekennzeichnet, daß das Servo - Ein-/Auslaßventil (4) des ersten Hilfsmittels (1) einen maximalen Durchflußquerschnitt aufweist, der kleiner ist als derjenige des Servo - Ein-/Auslaßventils (5) des zweiten Hilfsmittels (2).

8. Gasdruckfeder nach Anspruch 1 bis 7, dadurch gekennzeichnet, daß das zweite Hilfsmittel (2) einen Sensor (6) für Extremverlagerungen der beiden Elemente (7,8) umfaßt, daß der Sensor (6) signalleitend mit dem ersten Hilfsmittel (1) verbunden ist und daß das erste Hilfsmittel (1) durch das Signal des Sensors (6) außer Funktion setzbar ist.

## Claims

1. A gas pressure spring for the mutual support of two vibrating elements (7, 8) which move relative to each other, in which gas pressure spring first and second aids (1, 2) are provided which are controlled by sensors (9, 10) and bring about the blow-out of excess pressurised gas from the gas pressure spring or the in-feed of additional pressurised gas into the gas pressure spring by the actuation of valves (3; 4, 5), the first aid (1) being provided for the compensation of vibration-related pressure changes in the gas pressure spring, the second aid (2) being provided for a compensation of positional changes of the mutual assignment of the elements (7, 8) supported by the gas pressure spring, and the function of the second aid (2) being cancelled by a frequency filter when vibrations of a frequency of more than 1 Hz are introduced, characterised in that the first aid (1) is effective only in the case of pressure changes of a frequency above a threshold value and the second aid (2) only in the case of changes of the mutual assignment of the two elements (7, 8) of a frequency below the threshold value.

2. A gas pressure spring according to claim 1, characterised in that the threshold value is at a frequency of the introduced vibrations from 0.1 to 0.5 Hz.

3. A gas pressure spring according to any of claims 1 to 2, characterised in that the threshold value is at a frequency of the introduced vibrations from 0.25 to 0.35 Hz.

4. A gas pressure spring according to any of claims 1 to 3, characterised in that the first and the second aids (1, 2) have signal outputs which are connected jointly to the signal input of a single servo-inlet/outlet valve (3).

5. A gas pressure spring according to any of claims 1 to 3, characterised in that the first and the second aids (1, 2) have signal outputs which are connected in each case to the signal input of a separate servo-inlet/outlet valve (4, 5).

6. A gas pressure spring according to claim 5, characterised in that the separate servo-inlet/outlet valves (4, 5) have a throughflow cross-section which is variable in proportion to the size of the actual deviation in pressure/position.

7. A gas pressure spring according to any of claims 1 to 5, characterised in that the servo-inlet/outlet valve (4) of the first aid (1) has a maximum throughflow cross-section which is smaller than that of the servo-inlet/outlet valve (5) of the second aid (2).

8. A gas pressure spring according to any of claims 1 to 7, characterised in that the second aid (2) comprises a sensor (6) for extreme displacements of the two elements (7, 8), in that the sensor (6) is connected to the first aid (1) in a signal-conducting manner, and in that the first aid (1) can be deactivated by the signal of the sensor (6).

## Revendications

1. Ressort à pression de gaz pour l'appui réciproque de deux éléments oscillants (7, 8) en mouvement relatif, comprenant des premiers et seconds moyens (1, 2) commandés par des sondes (9, 10) provoquant la purge de gaz comprimé excédentaire du ressort à pression de gaz, resp. l'injection de gaz comprimé supplémentaire dans le ressort à pression de gaz par la mise en action de soupapes (3, 4, 5), lesdits premiers moyens (1) étant prévus pour compenser des variations de pression dans le ressort à pression de gaz dues à des oscillations, le second dispositif de secours (2) étant prévu pour compenser des variations dans l'agencement des éléments (7, 8) supportés par le ressort à pression de gaz, la fonction desdits seconds moyens (2) étant supprimé par un filtre de fréquences lors de l'introduction d'oscillations de fréquences supérieures à 1 Hz, caractérisé en ce que lesdits premiers moyens (1) ne sont efficaces que dans le cas de variations de pression d'une fréquence au dessus d'une valeur seuil, et les seconds moyens (2) sont uniquement efficaces dans le cas de variations dans l'agencement des deux éléments (7, 8) ayant une fréquence en dessous de la valeur seuil.

2. Ressort à pression de gaz selon la revendication 1, caractérisé en ce que ladite valeur seuil de fréquence des oscillations introduites se situe entre 0,1 et 0,35 Hz.

3. Ressort à pression de gaz selon les revendications 1 à 2, caractérisé en ce que ladite valeur seuil de fréquence des oscillations introduites se situe entre 0,25 et 0,35 Hz.

4. Ressort à pression de gaz selon les revendications 1 à 3, caractérisé en ce que les premiers et seconds moyens (1, 2) possèdent des sorties de signaux qui sont connectées toutes les deux à l'entrée de signaux d'une seule servo-soupape d'admission/d'échappement (3).

5. Ressort à pression de gaz selon les revendications 1 à 3, caractérisé en ce que les premiers et seconds moyens (1, 2) possèdent des sorties de signaux qui sont connectées chacune à l'entrée de signaux d'une servo-soupape d'admission/d'échappement séparée (4, 5).

6. Ressort à pression de gaz selon la revendication 5 caractérisé en ce que les servo-soupapes d'admission/d'échappement séparées (4, 5) ont une section d'écoulement qui peut être variée proportionnellement à la grandeur de l'écart de pression/position réel.

7. Ressort à pression de gaz selon les revendications 1 à 5, caractérisé en ce que la servo-soupape d'admission/d'échappement (4) des premiers moyens (1) présente une section d'écoulement maximale qui est plus petite que celle de la servo-soupape d'admission/d'échappement (5) des seconds moyens (2).

8. Ressort à pression de gaz selon les revendications 1 à 7, caractérisé en ce que les seconds moyens (2) comprennent une sonde (6) pour détecter des déplacements relatifs extrêmes des deux éléments (7, 8), en ce que ladite sonde (6) est relié par un signal aux premiers moyens (1) et en ce que les premiers moyens (1) peuvent être mis hors fonction par le signal de la sonde (6).

Fig. 1

Fig. 2